# EUROPEAN PATENT SPECIFICATION

(11) **EP 0 397 505 B1**
(45) Date of publication and mention of the grant of the patent: **14.12.1994**
(21) Application number: 90305067.2
(22) Date of filing: 10.05.1990
(51) Int. Cl.: B29C 67/14, B29B 15/12

(54) **Method and apparatus for manufacturing fibre-reinforced material**
Verfahren und Vorrichtung zur Herstellung faserverstärkter Werkstoffe
Procédé et dispositif pour la fabrication de matières premières renforcées de fibres

(30) Priority: 10.05.1989 FI 892265
(43) Date of publication of application: 14.11.1990
(73) Proprietor: NESTE OY, FIN-02150 Espoo (FI)
(72) Inventor: Unger, Michael, FI-06100 Porvoo (FI)
(74) Representative: Lamb, John Baxter

(56) References cited:
- WO-A-88/03468
- DE-A- 2 137 778
- DE-A- 2 516 209
- US-A- 4 588 538

## Description

The present invention concerns a method and apparatus for manufacturing a fibre-reinforced material. Specifically the present invention concerns a method and apparatus for manufacturing fibre-reinforced material, which is formed by a reinforcing fibre bundle or bundles bonded with a matrix forming resin material in such a way that also the individual fibres are surrounded by resin material.

The main problem in the manufacture of products of this kind is the high viscosity of some matrix forming materials. Because the individual fibres in the fibre bundles are very tightly near each other, it is thereby difficult for the resin material to penetrate into the bundle to surround all individual fibres. However this would be necessary in view of the properties of the product, such as strength, stiffness, chemical resistance etc.

Many methods have been tried for the solution of the problem; in one solution fibre bundles are transferred through a so-called cross-head die (as shown in US 4 588 538), in which molten or liquid resin is penetrated into the fibre bundles moving through the die. In the so-called powder method (as shown in US 4 614 678), a web of fibre bundles is transferred through a bed of dry thermoplastic resin particles, whereby the web of fibre bundles carries along resin particles, which at a later stage are melted in the fibre bundle. There are also solvent methods in which fibre bundles are impregnated with resins dissolved in liquid medium.

The cross-head die method has proved to be ineffective in the impregnation of fibre bundles with thermoplastic resin because all individual fibres will not be surrounded by resin material. Powder methods have proven to involve a multiple of processing stages which are difficult to synchronize, are expensive to purchase and operate while damaging the reinforcement. In solvent methods a drying process is required which is expensive, causes environmental problems, is time-consuming and limits the production rate. Furthermore the quality of the product is low due to voids left after the removal of solvents.

The present invention provides a method and apparatus for impregnating reinforcing fibres in the form of fibre bundles so that individual fibres are surrounded by bonding resin. The invention is based on the known phenomena that given pseudoplastic materials being made subject to shear stresses experience a decrease in viscosity. This phenomena, known as "shear thinning", is common for various emulsions, dispersions, suspensions and other materials including melts of thermoplastic resins and in minor amount also solutions of thermoset resins. The degree of shear thinning response can be altered with the level of shear stress applied to the material. At low stresses little response is achieved, at intermediate shear stresses shear thinning response increases dramatically, while at very high stresses response reverts to lower levels as the material approaches minimum viscosity.

A typical range of viscosity for thermoplastic resin melts is 10²-10⁶ PaS and for thermostat resin solution 100-5000 PaS. In the impregnation of reinforcing fibres a range of 1-10 PaS is ideal, a common magnitude is 10² PaS and in some cases 10³ PaS can be acceptable. Typical shear rate ranges for polymer melts and solutions are 10⁻¹-10⁶ l/S and range of maximum response can be 10⁰-10⁴ l/S.

The method according to the invention is concerned with impregnating of fibre bundles with molten or liquid resin in manufacturing a fibre-reinforced material, which material comprises a fibre bundle or bundled groups of fibres each fibre surrounded by matrix resin, by impregnating a continuous web of one or more fibre bundles with a molten or liquid resin and solidifying said resin by cooling or a chemical reaction. The method of the invention is characterized in that before said impregnation the molten or liquid resin material is made subject to shear forces by forcing it to flow through a channel ending to an impregnation point, said channel containing at least one section having decreasing cross-section and/or said channel having a cross-section sufficiently narrow to cause into molten or liquid resin material shear forces decreasing viscosity.

With the method of the invention it is possible to manufacture any fibre-reinforced material, in which the fibres are in form of bundles. The fibres can be any kind of fibres bondable by a matrix resin. Such products are for example fibre-reinforced granules for injection molding and other processes, prepregs or preimpregnated materials for conventional processes such as pultrusion, filament winding, tape laying etc.

Suitable fibres to be used in the invention are glass fibres, carbon fibres and aramid fibres and thermoplastic fibres. Common reinforcing fibre materials are glass fibre products in the form of bundles, which can be used as single bundles or also in the form of woven products, for example as glass fibre rovings. Typically glass fibre bundles contain thousands of individual fibres with a diameter of 10-17 µm.

The resin material to be used for bonding fibre-reinforced products can be a thermoplastic resin, which is impregnated into fibre bundles as melt, or a thermosetting resin, which will be solidified after impregnation with heat or a chemical reaction.

Suitable thermoplastic resins are among others olefine and copolymers, vinyl chloride homo and copolymers, polyethylene terephtalate, acrylonitrile homo polymers and copolymers, polyamides or copolyamides, thermoplastic polymers of formaldehyde, polycarbonate, polysulphone and mixtures of two or more of the polymers above or any other thermoplastics which show decreased viscosity by shearing action.
The invention concerns also an apparatus for impregnating reinforcing fibres in the form of fibre bundles so that individual fibres are surrounded by bonding resin, comprising means for moving a web of a continuous fibre bundle or bundles past an impregnation point and means for feeding molten or liquid resin to said impregnation point through a channel, characterised in that the channel contains at least one section having decreasing cross-section and/or which has a cross-section sufficiently narrow to cause shear forces in the molten or liquid resin material to decrease its viscosity.

According to an advantageous embodiment of the invention said means for feeding molten or liquid resin to the impregnation point comprise a capillary feed pipe, which ends to the impregnation point in the impregnation head through one or more feed openings formed into the wall of the impregnation head.

According to an advantageous embodiment of the invention said feed openings have circular, rectangular or other cross-section.

According to an advantageous embodiment of the invention said feed openings consist of one of more slits cut into the wall of said impregnation head.

According to an advantageous embodiment of the invention said impregnation head is connected to the outlet of an extruder.

According to an advantageous embodiment of the invention the outer surface of the impregnation head is curved or planar within the area of impregnation.

The invention will be further illustrated but not limited by referring to figures, in which

Fig. 1 is a principal drawing of an apparatus according to the invention applied for manufacturing continuous fibre-reinforced thermoplastic granules.

Fig. 2 is a schematic illustration of the impregnation head for impregnating a web of glass fibre bundles with matrix resin according to the invention.

Fig. 3 is a more detailed view of the impregnation head according to the invention.

Figs 4 and 5 are two end views from the impregnation head in Fig. 3.

Fig. 6 is a general view of the impregnation head according to the invention attached to an extruder.

Fig. 7 is a detail of the impregnation head showing several feed openings having a round cross-section for supplying molten thermoplastic resin to the impregnation point.

Fig. 8 is a detail of the impregnation head showing one slit-like feed opening for supplying molten thermoplastic resin to the impregnation point and

Fig. 9 is a detail of the impregnation head showing two slit-like feed openings having a round cross-section and opening to different sides of the impregnation head for supplying molten thermoplastic resin to the impregnation point.

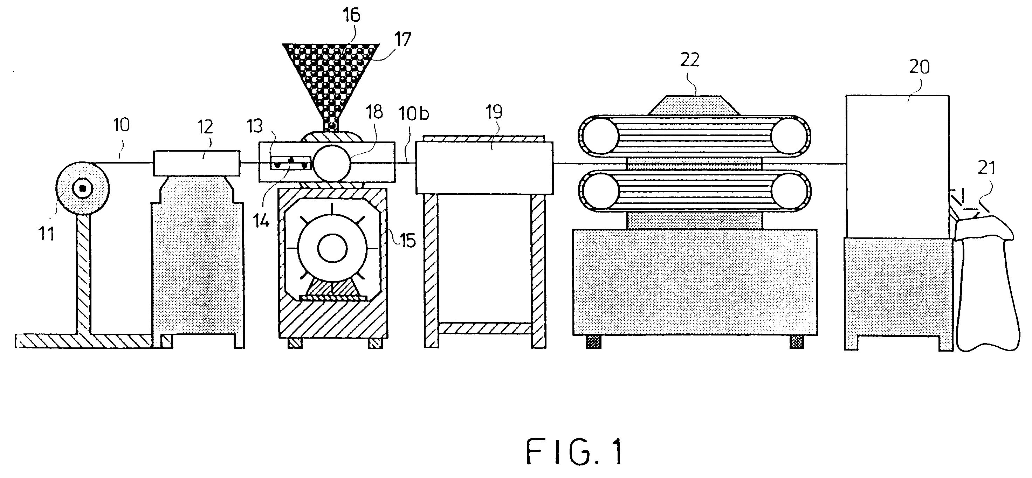

In Fig. 1 a web 10 of glass fibre bundles is supplied from a drum 11 through a preheating chamber 12 and a spreading device 13 into an impregnation head 18. In the spreading device 13 the web 10 is transported via a series of valses 14, so that the fibre alternately runs over and under the valses 14. This device spreads the bundles of fibres in some extent and thus facilitate the impregnation stage. However, it shall be noted that the use of a spreading device 13 is not necessary in any way and does not form a part of the invention. The impregnation head 18 is connected to an extruder 15, into which the resin material 16 to be impregnated is fed through a hopper 17. In the extruder 15 the resin is melted and is formed to be ready to be fed to the impregnation head 18 according to the invention.

The resin impregnated web 10b or band of fibre bundles is then transferred to a cooling unit 19, where the molten resin is solidified by cooling. The solidifying can also take place by chemical reaction, whereat the impregnated resin may contain the additives necessary for the hardening and in the hardening naturally additional heating can be used, if necessary.

From the cooling unit 19 the resin impregnated and hardened fibre bundles are then transferred to a chopper 20, which cuts the impregnated web to pieces 21 of proper length, which are ready for packing or further treatments. With the method and apparatus of the invention it is naturally possible to prepare also continuous fibre-reinforced products, which in that case are cut in respective wished lengths or are left completely uncut.

For transportation of the fibre bundle web 10 through the apparatus in Fig. 1 can be carried out by any suitable pulling device. A belt-driven pulling device 22 is schematically illustrated in Fig. 1.

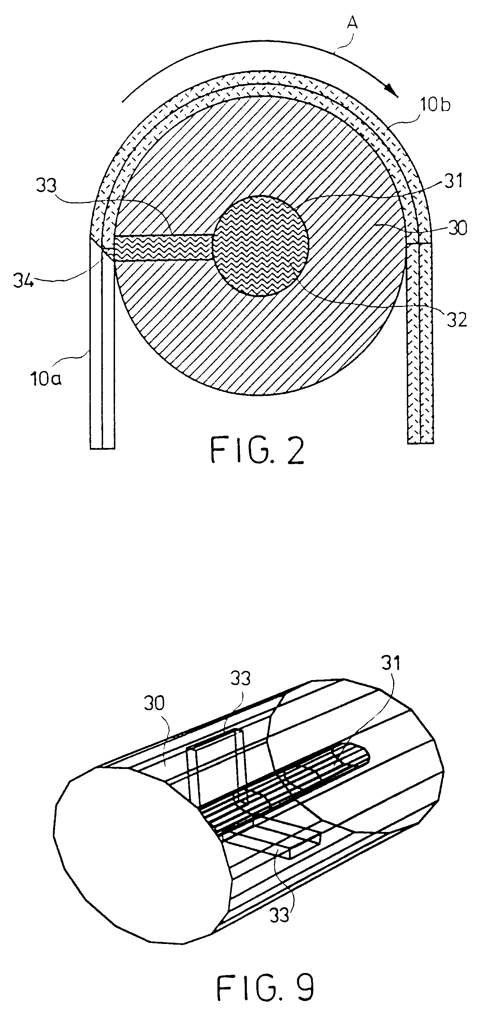

In Fig. 2 there is disclosed an impregnation head 30, inside which there is a capillary feed channel 31. The resin 32 to be impregnated is pumped through this capillary channel 31 and thus the resin is made subject to shear forces, which lower its viscosity. From the capillary channel 31 a feed opening 33 extends to the outer surface of the impregnation head 30 at an impregnation point 34. The web of fibre bundles 10a travels to the direction marked with arrow A past this impregnation point 34, whereby the resin having lowered viscosity penetrates to the web 10a. The impregnated web is marked with 10b.

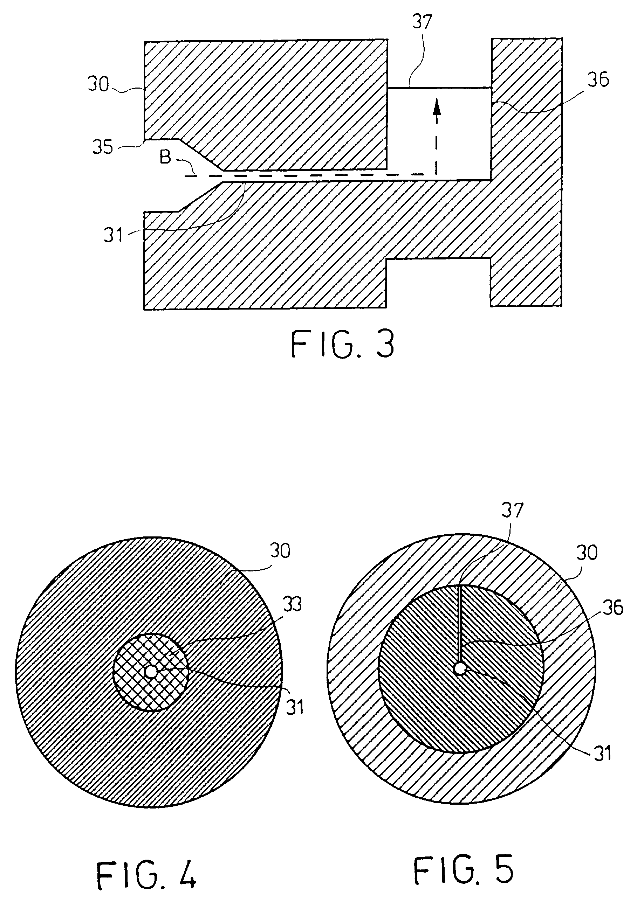

In Fig. 3 there is disclosed a more detailed drawing of the impregnation head 30. The impregnation head 30 can be attached to an extruder in point 33. A capillary feed channel 31 goes through the impregnation head 30 to a slit-like feed opening 34, which opens to the surface of the impregnation head at point 35. The resin from the extruder flows through the feed channel 31 into the direction of dot-lined arrow B and its viscosity will be lowered by shear forces in the capillary channel 31.

Fig. 4 is a cross-section of the impregnation head 30 in Fig. 3 viewed from the extruder side and Fig. 5 is a similar cross-section viewed from the opposite side. As best seen in Fig. 5 the feed opening 34 can be a slit extending from the capillary channel 31 to the impregnation point 35. Of course the feed opening 34 can as well be formed by one or more cavities of other shape.

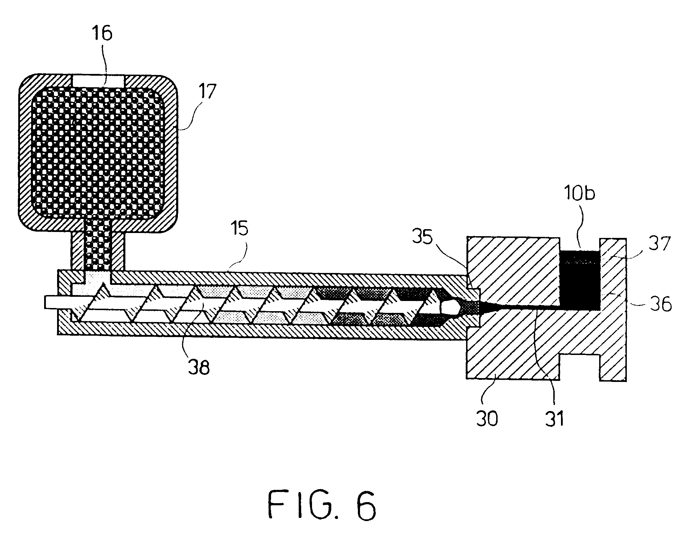

In Fig. 6 there is a general view of the impregnation head 30 attached to an extruder 15. The resin 16 to be impregnated is fed to the extruder 15 through a hopper 17. In the extruder 15 the resin is melted and consolidated and transported with the aid of a screw 36 to the outlet 33 of the extruder 15 and further to the capillary channel 31. Also seen in this figure is the web 10b passing by the impregnation point 35.

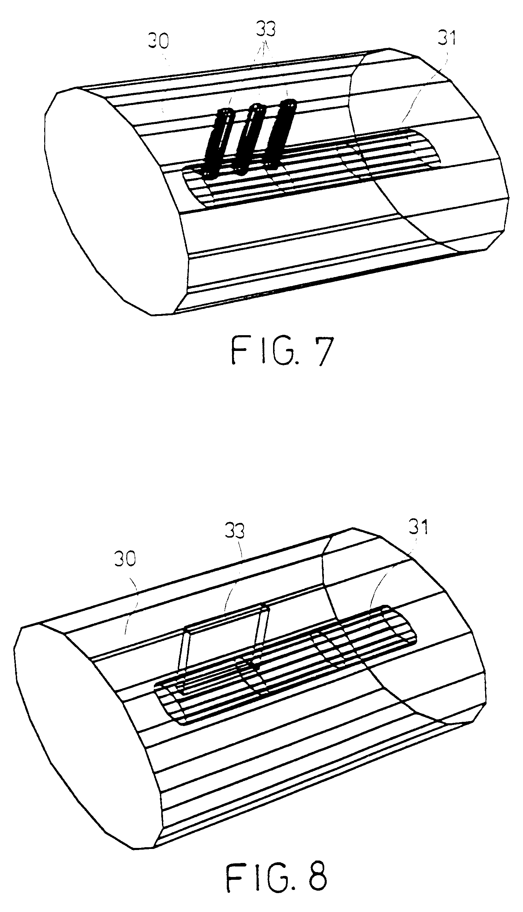

In Figs 7 and 8 different shapes of the feed openings 33 have been disclosed. In Fig. 7 there are three openings 33 with a circular cross-section. There can be one or several openings over the width of the fibre bundle web. In Fig. 8 there is one slit-like feed opening 33, the width of which is approximately same as that of the fibre bundle web. In Fig. 9 there is disclosed an embodiment, in which there is two slit-like feed openings 33 opening to different sides of the impregnation head 30. Of course there can be more than 2 slit-like feed openings. It is possible also in the embodiment of Fig. 7 to use two or more groups of feed openings 33.

Although the invention has been described above applied to the impregnation of a moving fibre bundle web, it is evident that the fibre bundle web can be stationary and the impregnation head can be arranged to be movable. The function of the invention will be same in both cases. Further it is possible to use two or more impregnation heads according to the invention and these impregnation heads can be on the same or different sides of the fibre bundles web to be impregnated.

## Claims

1. A method for impregnating fibre bundles with a molten or liquid resin (32) in the course of manufacturing a fibre-reinforced material by impregnating a continuous web (10,10a) of one or more fibre bundles with a molten or liquid resin (32) and solidifying the resin (32) by cooling or chemical reaction, characterized in that before said impregnation the molten or liquid resin material (32) is subjected to shear forces by forcing it to flow through a channel (31) communicating with an impregnation point (34,37), said channel containing at least one part having decreasing cross-section and/or said channel having a cross-section sufficiently narrow to cause shear forces in the molten or liquid resin material (32) to decrease its viscosity.

2. A method according to claim 1, characterized in that said resin matrix is a thermoplastic resin.

3. A method according to claim 2, characterized in that the thermoplastic matrix material comprises an olefine homo or copolymer, a vinyl chloride homo or copolymer, polyethylene terephthalate, an acrylonitrile polymer or copolymer, a polyamide or copolyamide, thermoplastic polymer of formaldehyde, polycarbonate or polysulphone.

4. An apparatus for impregnation of fibre bundles with a molten or liquid resin (32) in the course of manufacturing a fibre-reinforced material, comprising means for moving a web (10;10a) of a continuous fibre bundle or bundles past an impregnation point (34,37) and means for feeding molten or liquid resin (32) to said impregnation point (34,37) through a channel (31), characterised in that the channel (31) contains at least one part having a decreasing cross-section and/or which has a cross-section sufficiently narrow to cause shear forces in the molten or liquid resin material (32) to decrease its viscosity.

5. Apparatus according to claim 4, characterized in that said means for feeding molten or liquid resin to the impregnation point (34,37) comprises a capillary feed pipe (31), which connects with the impregnation point (34,37) through one or more feed openings (34,36) formed in the wall of an impregnation head, the feed openings (34,35) preferably having a circular, rectangular or other cross-section.

6. Apparatus according to claim 5, characterized in that said feed openings (34,36) are one or more slits cut in the wall of the impregnation head.

7. Apparatus according to claim 5 or claim 6 characterized in that said impregnation head (30) is connected to the outlet (35) of an extruder (15).

8. Apparatus according to any of claims 5 to 7, characterized in that said impregnation head (30) is curved or planar within the area of impregnation.

## Patentansprüche

1. Verfahren zum Imprägnieren von Faserbündeln mit geschmolzenem oder flüssigem Harz (32) im Verlauf der Herstellung faserverstärkter Werkstoffe durch Imprägnieren einer endlosen Bahn (10, 10a) eines oder mehrerer Faserbündel mit geschmolzenem oder flüssigem Harz (32) und dessen Verfestigung durch Abkühlung oder chemische Umsetzung, dadurch gekennzeichnet, daß man vor dieser Imprägnierung den geschmolzenen oder flüssigen Harzstoff (32) Scherkräften aussetzt, indem man diesen zwingt, durch einen an einer Imprägnierstelle (34, 37) mündenden Kanal (31) zu fließen, wobei dieser Kanal mindestens einen Teil abnehmenden Querschnitts und/oder einen genügend engen Querschnitt aufweist, um in dem geschmolzenen oder flüssigen Harzstoff (32) viskositätserniedrigende Scherkräfte zu erzeugen.

2. Verfahren nach Anspruch 1, dadurch gekennzeichnet, daß diese Harzmatrix ein thermoplastisches Harz ist.

3. Verfahren nach Anspruch 2, dadurch gekennzeichnet, daß dieser thermoplastische Matrixstoff einen Olefinhomo- oder -copolymer, Vinylchloridhomo- oder -copolymer, Polyethylenterephthalat, Acrylnitrilpolymer oder -copolymer, Polyamid oder Copolyamid, thermoplastischen Formaldehydpolymer, Polycarbonat oder Polysulfon umfasst.

4. Vorrichtung zum Imprägnieren von Faserbündeln mit geschmolzenem oder flüssigem Harz (32) im Verlauf der Herstellung faserverstärkter Werkstoffe, umfassend Mittel, um eine Bahn (10; 10a) eines endlosen Faserbündels bzw. endloser Faserbündel an einer Imprägnierstelle (34, 37) vorbeizuführen, sowie Mittel zum Zuführen geschmolzenen oder flüssigen Harzes (32) zu dieser Imprägnierstelle (34, 37) durch einen Kanal (31), dadurch gekennzeichnet, daß der Kanal (31) mindestens einen Teil abnehmenden Querschnitts und/oder einen genügend engen Querschnitt aufweist, um in dem geschmolzenen oder flüssigen Harzstoff (32) viskositätserniedrigende Scherkräfte zu erzeugen.

5. Vorrichtung nach Anspruch 4, dadurch gekennzeichnet, daß diese Mittel zum Zuführen geschmolzenen oder flüssigen Harzes zu der Imprägnierstelle (34, 37) eine Zufuhrkapillarröhre (31) umfassen, die über eine oder mehrere in der Wand eines Imprägnierkopfes gebildete Zufuhröffnungen (34, 36) mit der Imprägnierstelle (34, 37) verbunden sind, wobei die Zufuhröffnungen (34, 35) vorzugsweise einen kreisförmigen, rechteckigen oder sonstigen Querschnitt aufweisen.

6. Vorrichtung nach Anspruch 5, dadurch gekennzeichnet, daß diese Zufuhröffnungen (34, 36) ein oder mehrere in die Wand des Imprägnierkopfes eingeschnittene Schlitze sind.

7. Vorrichtung nach Anspruch 5 oder 6, dadurch gekennzeichnet, daß dieser Imprägnierkopf (30) mit dem Ausgang (35) eines Extruders (15) verbunden ist.

8. Vorrichtung nach einem der Ansprüche 5 bis 7, dadurch gekennzeichnet, daß dieser Imprägnierkopf (30) innerhalb des Imprägnierungsbereiches gekrümmt oder eben ist.

## Revendications

1. Procédé pour imprégner des faisceaux de fibres avec une résine en fusion ou une résine liquide (32) au cours de la fabrication d'une matière renforcée par fibres par imprégnation d'une bande continue (10, 10a) d'un ou de plusieurs faisceaux de fibres avec une résine en fusion ou une résine liquide (32) et solidification de la résine (32) par refroidissement ou réaction chimique, caractérisé en ce qu'avant l'imprégnation, on soumet la résine en fusion ou la résine liquide (32) à des forces de cisaillement en la faisant s'écouler dans un canal (31) communiquant avec un point d'imprégnation (34, 37), ce canal contenant au moins une partie ayant une section transversale décroissante et/ou le canal ayant une section transversale suffisamment étroite pour provoquer des forces de cisaillement dans la résine en fusion ou la résine liquide (32) pour diminuer sa viscosité.

2. Procédé selon la revendication 1, caractérisé en ce que la matrice résine est une résine thermoplastique.

3. Procédé selon la revendication 2, caractérisé en ce que la matrice thermoplastique comprend un homo ou copolymère d'oléfine, un homo ou copolymère de chlorure de vinyle, un téréphtalate de polyéthylène, un copolymère ou polymère d'acrylonitrile, un polyamide ou un copolyamide, un polymère thermoplastique de formaldéhyde, un polycarbonate ou un polysulfone.

4. Appareil pour l'imprégnation de faisceaux de fibres avec une résine en fusion ou une résine liquide (32) au cours de la fabrication d'une matière renforcée par fibres, comprenant des moyens pour former une bande (10, 10a) d'un faisceau de fibres continu ou de plusieurs faisceaux de fibres continus passant devant un point d'imprégnation (34, 37) et des moyens pour alimenter la résine en fusion ou la résine liquide (32) au point d'imprégnation (34, 37) par un canal (31), caractérisé en ce que le canal (31) contient au moins une partie avec une section transversale décroissante et/ou qui possède une section transversale suffisamment étroite pour provoquer des forces de cisaillement dans la résine en fusion ou la résine liquide (32) pour diminuer sa viscosité.

5. Appareil selon la revendication 4, caractérisé en ce que les moyens destinés à amener la résine en fusion ou la résine liquide sur le point d'imprégnation (34, 37) comprennent un tuyau d'alimentation capillaire (31) qui communique avec le point d'imprégnation (34, 37) par une ou plusieurs ouvertures d'alimentation (34, 36) formées dans la paroi de la tête d'imprégnation, les ouvertures d'alimentation (34, 35) étant de préférence circulaires, rectangulaires ou ayant une autre section transversale.

6. Appareil selon la revendication 5, caractérisé en ce que les ouvertures d'alimentation (34, 36) sont constituées par une ou plusieurs fentes découpées dans la paroi de la tête d'imprégnation.

7. Appareil selon la revendication 5 ou la revendication 6, caractérisé en ce que la tête d'imprégnation (30) communique avec la sortie (35) d'une extrudeuse (15).

8. Appareil selon l'une quelconque des revendications 5 à 7, caractérisé en ce que la tête d'imprégnation (30) est incurvée ou plane dans la zone d'imprégnation.
